# EUROPÄISCHE PATENTANMELDUNG

(11) **EP 1 736 489 A2**
(43) Veröffentlichungstag der Anmeldung: **27.12.2006**
(21) Anmeldenummer: 06011926.0
(22) Anmeldetag: 09.06.2006
(51) Int. Cl.: C08G 18/16, C08G 18/22, C08G 18/48, C08G 18/10

(54) **Polyurethanelastomere, Verfahren zu ihrer Herstellung und ihre Verwendung**

(30) Priorität: 22.06.2005 DE 102005028785
(71) Anmelder: Bayer MaterialScience AG, 51368 Leverkusen (DE)
(72) Erfinder: Emmrich, Eva Dr., 45149 Essen (DE); Brecht, Klaus, 51399 Burscheid (DE); Hahn, Frank, 41541 Dormagen (DE)

(57) **Zusammenfassung**

Gegenstand der Erfindung sind Polyurethanelastomere, ein Verfahren zu ihrer Herstellung und ihre Verwendung zur Herstellung von elastomeren Formteilen.

## Beschreibung

Gegenstand der Erfindung sind Polyurethanelastomere, ein Verfahren zu ihrer Herstellung und ihre Verwendung zur Herstellung von elastomeren Formteilen.

Polyurethan (PUR)-Elastomere sind lange bekannt und wurden bereits für unterschiedlichste Anforderungen maßgeschneidert entwickelt (US-A 5 952 053). Um ihre Polymerisationsgeschwindigkeiten zu kontrollieren, wurde bereits eine große Anzahl verschiedenster Metallkatalysatoren untersucht und eingesetzt. Neben den verbreiteten Organozinn-Verbindungen gehören hierzu auch Organoverbindungen bzw. organische Salze verschiedener anderer Elemente, wie z.B. Lithium, Titan, Bismut, Zink, Zirkonium. Beispielsweise werden in US 6 590 057 Katalysatormischungen aus Titan, Lithium und Bismut beschrieben. Mit diesem Katalysatorsystem ist es allerdings nicht möglich, lange Fliesszeiten mit gleichzeitig guten mechanischen Eigenschaften der PUR-Systeme zu realisieren.

Ein wichtiges Anwendungsgebiet von PUR-Elastomeren ist unter anderem die Fabrikation von Schuhsohlen. Bei ihrer Herstellung müssen die eingesetzten Katalysatorsysteme für eine gute Verarbeitbarkeit der Sohle sorgen. Im Detail zählen hierzu kurze Entformzeiten und hohe Entformhärten sowie lange Start- und Fliesszeiten für eine konturgenaue Formausfüllung. Darüber hinaus müssen die Katalysatoren gute Endeigenschaften begünstigen, wie hohe Zugfestigkeiten, hohe Bruchdehnung und niedrige Stichaufweitungen bei Dauerbiegebelastung. Diesem Anforderungskatalog können PUR-Elastomere, die mit marktüblichen Organozinnkatalysatoren hergestellt werden, nur teilweise erfüllen.

Aufgabe der vorliegenden Erfindung war es daher, PUR-Elastomere zur Verfügung zu stellen, die neben guten Verarbeitungseigenschaften (lange Fließzeiten, kurze Entformzeiten) gute mechanische Eigenschaften aufweisen (gute Dauerbiegeeigenschaften, hohe mechanische Festigkeiten) verbunden mit einer verbesserten Gasausbeute.

Überraschenderweise konnte diese Aufgabe durch PUR-Elastomere gelöst werden, die mit speziellen Katalysatormischungen bestehend aus mindestens einer organischen Titanverbindung und mindestens einer Zinkverbindung und gegebenenfalls mindestens einem organischen Lithiumcarboxylat und gegebenenfalls mindestens einem organischen Bismutcarboxylat hergestellt werden.

Im Vergleich zu den marktüblichen Organozinnverbindungen wurde bei Einsatz der speziellen Katalysatormischung zusätzlich eine deutlich niedrigere Freischaumrohdichte und damit eine niedrigere Formteildichte erreicht.

Gegenstand der Erfindung sind Polyurethan-Elastomere erhältlich durch Umsetzung einer Polyolformulierung (A) aus
a) einer Polyolkomponente aus
   a1) mindestens einem Polyetherpolyol mit einer OH-Zahl von 20 bis 112 und einer Funktionalität von 2, welches durch Alkoxylierung mit Propylenoxid und/oder Ethylenoxid mit überwiegend primären OH-Gruppen erhalten wird,
      und gegebenenfalls
   a2) mindestens einem Polyetherpolyol mit einer OH-Zahl von 20 bis 112 und einer Funktionalität von >2 bis 3,5, welches durch Alkoxylierung mit Propylenoxid und/oder Ethylenoxid mit überwiegend primären OH-Gruppen erhalten wird,
      wobei die Polyolkomponente a) gegebenenfalls
      organische Füllstoffe enthält, wie sie durch Pfropfung mit Styrol/Acrylnitril oder durch Addition von Diaminen und Diisocyanaten erhalten werden,
b) Kettenverlängerer und/oder Vernetzer mit Molekulargewichten von 60 bis 499 g/mol,
c) gegebenenfalls Treibmitteln,
d) Aminkatalysatoren,
e) einer Katalysatormischung bestehend aus mindestens einer organischen Titan- und mindestens einer organischen Zinkverbindung und gegebenenfalls mindestens einem organischen Lithiumcarboxylat und gegebenenfalls mindestens einem organischen Bismut-carboxylat,
f) gegebenenfalls Zusatzstoffen
mit einer Isocyanatkomponente (B)
unter Einhaltung eines Äquivalenzverhältnis der NCO-Gruppen der Isocyanatkomponente (B) zur Summe der gegenüber Isocyanatgruppen reaktiven Wasserstoffe der Komponenten a), b), c), d) und e) von 0,8:1 bis 1,2:1, vorzugsweise 0,95:1 bis 1,15:1, besonders bevorzugt 0,98:1 bis 1,05:1.

Ein weiterer Gegenstand der Erfindung ist ein Verfahren zur Herstellung der erfindungsgemäßen Polyurethanelastomere, welches dadurch gekennzeichnet ist, dass eine Polyolformulierung (A) bestehend aus
a) einer Polyolkomponente aus
   a1) mindestens einem Polyetherpolyol mit einer OH-Zahl von 20 bis 112 und einer Funktionalität von 2, welches durch Alkoxylierung mit Propylenoxid und/oder Ethylenoxid mit überwiegend primären OH-Gruppen erhalten wird,
      und gegebenenfalls
   a2) mindestens einem Polyetherpolyol mit einer OH-Zahl von 20 bis 112 und einer Funktionalität von >2 bis 3,5, welches durch Alkoxylierung mit Propylenoxid und/oder Ethylenoxid mit überwiegend primären OH-Gruppen erhalten wird,
      wobei die Polyolkomponente a) gegebenenfalls organische Füllstoffe enthält, wie die durch Pfropfung mit Styrol/Acrylnitril oder durch Addition von Diaminen und Diisocyanaten erhalten werden,
b) Kettenverlängerer und/oder Vemetzer mit Molekulargewichten von 60 bis 499 g/mol,
c) gegebenenfalls Treibmitteln,
d) Aminkatalysatoren,
e) einer Katalysatormischung bestehend aus mindestens einer organischen Titan- und mindestens einer organischen Zinkverbindung und gegebenenfalls mindestens einem organischen Lithiumcarboxylat und gegebenenfalls mindestens einem organischen Bismutcarboxylat,
f) gegebenenfalls Zusatzstoffen
mit einer Isocyanatkomponente (B)
unter Einhaltung eines Äquivalenzverhältnis der NCO-Gruppen der Isocyanatkomponente (B) zur Summe der gegenüber Isocyanatgruppen reaktiven Wasserstoffe der Komponenten a), b), c), d) und e) von 0,8:1 bis 1,2:1, vorzugsweise 0,95:1 bis 1,15:1, besonders bevorzugt 0,98:1 bis 1,05:1
umgesetzt wird.

Die Isocyanatkomponente (B) ist bevorzugt ein Prepolymer (g) aus
g1) 4,4'-Diphenylmethandiisocyanat und/oder durch Carbodiimidisierung modifiziertem 4,4'-Diphenylmethandiisocyanat und
g2) einem oder mehreren Polyetherpolyolen mit einer OH-Zahl von 10 bis 112 und
g3) Polyethylenglykolen und/oder Polypropylenglykolen mit Molekulargewichten von 135 g/mol bis 700 g/mol.
Als organische Titanverbindungen in der Katalysatormischung e) werden vorzugsweise Verbindungen der folgenden Formel eingesetzt:

[M(L¹)ₚ(L²)ₚ(L³)ₚ(L⁴)ₚ]ₙ

mit M=Ti⁴⁺
wobei n Werte von 1 bis 20 und p Werte von 0 bis 4 einnehmen können und L¹, L², L³ und L⁴ gleiche oder verschiedene über O, S oder N-Atome koordinierte Gruppen sein können; wie z.B.:
(1) Alkoholate, Phenolate, Glykolate, Thiolate, Carboxylate oder Aminoalkoholate, die 1 bis 20 Kohlenstoffatome enthalten und optional eine oder mehrere funktionelle Gruppen aufweisen (z.B. Hydroxy, Amino, Carbonyl etc.) oder Sauerstoff-, Schwefel- oder Stickstöffgruppierungen zwischen den Kohlenstoffatomen enthalten (wie z.B. Ether-, Thioether-, Amin- oder Carbonylgruppen),
(2) verschiedene Fluor-freie, sterisch ungehinderte Chelatliganden aus der Gruppe der 1-Diketone, wie z.B. Benzoylaceton, Dibenzoylmethan, Ethylbenzoylacetat, Methylacetoacetat, Ethylacetoacetat und 2,4-Pentandion (auch bekannt als Acetylaceton) und andere Chelatliganden, wie z.B. N,N-Dimethylethanolamin, Triethanolamin, Salicylaldehyd, Salicylamid, Phenylsalicylat, Cyclopentanon-2-carbonsäure, Bisacetylacetylaceton, Thioacetylaceton, N,N'-bis(salicylidene)ethylendiamin.

Bevorzugte organische Titanverbindungen sind z.B. Titan(IV)- isopropoxid, Titan(IV)-n-butoxid, Titan(IV)-2-ethylhexoxid, Titan(IV)-n-pentoxid, Titan(IV)-(triethanolaminato)isopropoxid, Titan(IV)-(triethanolaminato)-n-butoxid, Isopropyl-triisostearyl-titanat, Bis(8-chinolinolato)-titanium(IV)-dibutoxid, Bis(ethylacetoacetato)titanium(IV)-diisobutoxid.

Besonders bevorzugt sind auch Titanverbindungen mit Liganden der oben genannten Gruppe (2), wie z.B. Titan(IV) bis(ethylacetoacetato)diisopropoxid, Titan(IV)-diisopropoxid-bis(2,4-pentan-dionat), Titan(IV)triisopropoxid(2,4-pentandionat), Ethoxybis(pentan-2,4-dionato-0,0')(propan-2-olato)titan, Titan(IV)-oxid-acetylacetonat, Bis(diacetylacetonato)titanium(IV)-butoxid-isopropoxid, Bis(diacetylacetonato)titanium(IV)-ethoxid-isopropoxid.

In Kombination mit der Titanverbindung werden bevorzugt gesättigte oder ungesättigte, aliphatische oder alicyclische sowie aromatische Carboxylate des Zink eingesetzt. Sie entsprechen der folgenden Formel:

[Zn(OOCR)₂]

wobei R ein Kohlenwasserstoffrest mit 1 bis 25 Kohlenstoffatomen ist. Bevorzugte Zinkverbindungen sind z.B. Zink(II)-acrylate, wie Zink(II)-methacrylat, Zink(II)-acetat, Zink(II)-citrat, Zink(II)-salicylate, wie Zink(II)-3,5-di-tert-butylsalicylat, Zink(II)-oxalat, Zink(II)-adipat, Zink(II)-carbamate, wie Zink(II)-dimethyldithiocarbamat, Zink(II)-phthalocyanine, wie Zink(II)-octabutyl-oxyphthalocyanin, Zink(II)-thiolate und Zink(II)-stearat. Besonders bevorzugte Zinkverbindungen sind Zink(II)-naphthenat, Zink(II)-decanoat, Zink(II)-butyrat, wie Zink(II)-4-cyclohexyl-butyrat, Zink(II)-neodecanoat, Zink(II)-isobutyrat, Zink(II)-benzoat, sowie Zink(II)-bis-2,2,6,6-tetramethyl-3,5-heptandionat und Zink(II)-p-toluolsulfonat. Besonders bevorzugt sind Zink(II)-octoat und Zink(II)-2-ethylhexanoat.

Bei Einsatz von organischen Bismutcarboxylaten werden vorzugsweise gesättigte oder ungesättigte, aliphatische oder alicyclische sowie aromatische Bismutcarboxylate eingesetzt. Sie entsprechen vorzugsweise den folgenden Formeln:

[Bi(OOCR)₃]

[Bi₂((OOC)₂R')₃]

wobei R ein Kohlenwasserstoffrest mit 1 bis 25 Kohlenstoffatomen und R' ein Kohlenwasserstoffrest mit 1 bis 25 Kohlenstoffatomen ist. Bevorzugte Carboxylate sind Bismut(III)-versatat, -tallat, -stearat, -adipat und -oxalat. Bevorzugt sind Bismut(III)-naphthenat, -decanoat, -butyrat, -isobutyrat, -nonat und -caprioat. Besonders bevorzugt sind Bismut(III)-neodecanoat, -2-ethylhexanoat und -octanoat.

Das organische Lithiumcarboxylat kann als Feststoff oder in Lösung verwendet werden.

Viele der unter e) eingesetzten Verbindungen können Agglomerate und/oder höhermolekulare Kondensationsprodukte bilden, die zwei oder mehr Metallzentren besitzen, welche durch einen oder mehrere Brückenliganden miteinander verbunden sind.

Die Katalysatoren d) und e) können als Feststoffe oder in Form von Lösungen eingesetzt werden. Als Lösungsmittel können insbesondere gesättigte oder ungesättigte, aliphatische oder alicyclische sowie aromatische Carbonsäuren der allgemeinen Formeln

RCOOH

HOOC-R'-COOH

verwendet werden, wobei R und R' Kohlenwasserstoffreste mit 1 bis 25 Kohlenstoffatomen sind. Bevorzugt sind z.B. Neodecansäure, 2-Ethylhexansäure und Naphtensäure.

Die Katalysatormischung e) wird bevorzugt in einer Menge von 0,001 bis 10 Gew.-%, bevorzugt 0,01 bis 1 Gew.-%, bezogen auf die Gesamtmenge an Verbindungen a), b), c), d) und f), eingesetzt.

Als Katalysatoren d) kommen vorzugsweise tertiäre Amine wie Triethylamin, Tributylamin, N,N,N',N'-Tetramethyl-ethylendiamin, Pentamethyl-diethylen-triamin und höhere Homologe 1,4-Diaza-bicyclo-[2,2,2]-octan, N-Methyl-N'-dimethylaminoethyl-piperazin, Bis-(dimethylamino-alkyl)-piperazine, N,N-Dimethylbenzylamin, N,N-Dimethylcyclohexylamin, N,N-Diethyl-benzylamin, 1,2-Dimethylimidazol, 2-Methylimidazol, monocyclische und bicyclische Amidine, Bis-(dialkylamino)-alkylether, wie Bis(dimethylaminoethyl)ether, sowie Amidgruppen enthaltende Verbindungen zum Einsatz.

Die Polyolkomponente a) hat bevorzugt eine mittlere Funktionalität von 2,0 bis 3,0 und ist ein Gemisch aus
a1) mindestens einem Polyetherpolyol mit einer OH-Zahl von 20 bis 112 und einer Funktionalität von 2, welches durch Alkoxylierung mit Propylenoxid und/oder Ethylenoxid mit überwiegend primären OH-Gruppen erhalten wird,
   und gegebenenfalls
a2) mindestens einem Polyetherpolyol mit einer OH-Zahl von 20 bis 112 und einer Funktionalität von >2 bis 3,5, welches durch Alkoxylierung mit Propylenoxid und/oder Ethylenoxid mit überwiegend primären OH-Gruppen erhalten wird.

Die Polyole a) können organische, polymere Füllstoffe enthalten. Diese Füllstoffe können durch Pfropfung mit Styrol/Acrylnitril auf Polyole a1) und/oder Polyole a2) oder durch Addition von Diaminen und Diisocyanaten z.B. in Polyolen als Lösungsmittel erhalten werden.

Als Isocyanatkomponente (B) kommen bevorzugt aromatische Polyisocyanate in Betracht, vorzugsweise Diisocyanatodiphenylmethan (MDI). Die Isocyanate können in Form der reinen Verbindungen oder als modifizierte MDI-Zusammensetzungen eingesetzt werden, beispielsweise in Form von Uretdionen, Isocyanuraten, Biureten und Allophanaten, sowie daraus hergestellte Prepolymere mit einem NCO-Gehalt von 10 bis 28 %. Das Prepolymer kann z.B. durch die Umsetzung von Diisocyanatodiphenylmethan mit einer Polyolkomponente mit einer OH-Zahl von 20 bis 112 und einer mittleren Funktionalität von 2,0 bis 3,0 und einer Polyolkomponente mit einem Molekulargewicht von 135 bis 700 g/mol hergestellt werden. Das Isocyanat kann auch Carbodiimid-Gruppen enthalten.

Als Komponente b) werden vorzugsweise di- oder trifunktionelle Alkohole mit Molekulargewichten von 60 bis 499 verwendet, wie z.B. 1,2-Ethandiol, Propylenglykol, 1,4-Butandiol, Diethylenglykol, Triethylenglykol, Trimethylolpropan, Glyzerin, Triethänolamin sowie aromatische/aliphatische Diamine.

Zur Herstellung von mikrozellularen PUR-Elastomeren wird als Treibmittel e) bevorzugt Wasser eingesetzt, das mit der Isocyanarkomponente (B) in situ unter Bildung von Kohlendioxid und Aminoverbindungen reagiert, die ihrerseits mit weiteren Isocyanatgruppen zu Harnstoffkomponenten weiterreagieren und hierbei als Kettenverlängerer wirken.

Als Treibmittel c) können anstelle von Wasser oder vorzugsweise in Kombination mit Wasser auch Gase oder leicht flüchtige anorganische oder organische Substanzen als physikalische Treibmittel mit Siedepunkten von -40°C bis +70°C eingesetzt werden. Als Treibmittel kommen z.B. halogensubstituierte Alkane oder perhalogenierte Alkane, wie R134a, R141b, R365mfc, R245fa, ferner *n*- und *iso*-Butan, *n*- und *iso*-Pentan, Cyclopentan, *n*- und *iso*-Hexan, Cyclohexan, *n*- und *iso*-Heptan oder Diethylether, Luft, CO₂ oder N₂O, in Frage. Als Treibmittel können auch Carbamate, wie z.B. das Addukt aus Ethylendiamin und CO₂ eingesetzt werden.

Als weitere gegebenenfalls mitzuverwendende Hilfs- und Zusatzmittel f) seien oberflächenaktive Substanzen, Schaumstabilisatoren, Zellregler, interne Treibmittel, wie Mikrosphären, interne Trennmittel, Farbstoffe, Pigmente, fungistatisch und bakteriostatisch wirkende Substanzen, Lichtschutz- und Oxidationsschutzmittel und Antistatika beispielhaft genannt.

Zur Herstellung der erfindungsgemäßen PUR-Elastomeren werden die Komponenten in solchen Mengen zur Umsetzung gebracht, dass das Äquivalenzverhältnis der NCO-Gruppen der Isocyanatkomponente (B) zur Summe der gegenüber Isocyanatgruppen reaktiven Wasserstoffe der Komponenten a), b), c), d), e) und f) 0,8:1 bis 1,2:1, vorzugsweise 0,95:1 bis 1,15:1 und insbesondere 0,98:1 bis 1,05:1 beträgt.

Zur Durchführung des erfindungsgemäßen Verfahrens wird in Analogie zu den bekannten Verfahren des Standes der Technik gearbeitet. Dies bedeutet im allgemeinen, dass die Komponenten a), b), c), d) und e) zu einer "Polyolkomponente" vereinigt werden und einstufig mit der Polyisocyanatkomponente B) in einer geschlossenen Form, beispielsweise einer geschlossenen Metall- oder Kunststofform, miteinander zur Reaktion gebracht werden, wobei man sich der üblichen Zweikomponenten-Mischaggregate bedient. Die Menge des in die Form eingebrachten Reaktionsgemisches und auch die Menge des Treibmittels, insbesondere Wasser, werden dabei so bemessen, dass Integralschaumstoffe einer Rohdichte von 100 bis 1050 kg/m³, bevorzugt 250 bis 950 kg/m³ resultieren. Die erfindungsgemäßen Verfahrensprodukte sind bevorzugt halbharte Integralschaumstoffe mit kompakter Oberfläche, d.h. ihre Härte Shore A gemäß DIN 53 505 liegt im Bereich von 15 bis 85.

Ein wichtiges Verwendungsgebiet der erfindungsgemäßen PUR-Elastomere liegt in der Schuhherstellung, beispielsweise der Herstellung geschäumter Schuhsohlen oder Schuheinbauteile.

### Beispiele

Die Herstellung der PUR-Elastomere erfolgte derart, dass man die A-Komponente bei 30°C in einer Niederdruck-Schäumanlage mit dem Prepolymer (B-Komponente) bei 30°C vermischte, die Mischung in eine auf 50°C temperierte Aluminium-Klappform (Größe 200*70*10 mm) einfüllte, die Klappform schloss und nach 4 Minuten das Elastomer entformte.

Erfindungsgemäß wurde dabei in der Polyolkomponente (A-Komponente) mindestens ein organisches Carboxylat des Titans und mindestens eine organische Verbindung des Zinks als Katalysator in Kombination mit mindestens einem tertiären Amin eingesetzt. Die Katalysatoren werden der Polyol-Formulierung im entsprechenden Verhältnis zugesetzt.

An den so hergestellten Elastomeren wurde die Shore A-Härte gemäß (DIN 53505) unmittelbar nach dem Entformen und nach 24 h Lagerung bestimmt. Weiterhin wurde die Stichaufweitung gemäß (DIN 53522) eines 2 mm breiten Durchstiches in der Biegelinie der Prüfkörper (Maße 2 cm x 15 cm x 1 cm) nach 60.000 Biegezyklen ermittelt. Die Ergebnisse sind in der nachstehenden Tabelle 1 zusammengestellt.

### Ausgangsmaterialien

Polyetherpolyole:
1) Polyetherpolyol mit einer OH-Zahl von 28 mit 70 % Propylenoxid und 30 % Ethylenoxideinheiten und überwiegend primären OH-Gruppen und Propylenglykol als Starter
2) SAN-Pfropfpolyetherpolyol mit einer OH-Zahl von 23 und Glyzerin als Starter
3) Gemisch aus Tripropylenglykol und Polyetherpolyol auf Basis Propylenoxid mit einer zahlenmittleren OH-Zahl von 173 für das Gemisch.
Isocyanatkomponente:
1) Prepolymer mit einem NCO-Gehalt von 19,8 %, hergestellt durch Umsetzung von 66 Gew.-Teilen 4,4'-Diisocyanatodiphenylmethan (4,4'-MDI), 5 Gew.-Teilen modifiziertem 4,4'-MDI mit einem NCO-Gehalt von 30 % (hergestellt durch teilweise Carbodiimidisierung) und 29 Gew.-Teilen des Polyetherpolyols 3)
DABCO: Diazabicyclooctan
Silicon DC 190: Schaumstabilisator von Air Products (Polysiloxan)

### Beispiel 1 (Vergleich)

Die Polyolkomponente bestand aus
1887,50 Gew.-Teilen des difunktionellen Polyetherpolyols 1),
250,00 Gew.-Teilen des Polyetherpolyols 2),
250,00 Gew.-Teilen 1,4-Butandiol,
1,00 Gew.-Teilen Bismut(III)-neodecanoat,
2,00 Gew.-Teilen Lithium-2-ethylhexanoat in 2-(2-Ethoxyethoxy)ethanol,
2,00 Gew.-Teilen Bis(diacetylacetonato)titanium(IV)-ethoxid-isopropoxid,
25,00 Gew.-Teilen DABCO,
20,00 Gew.-Teilen DABCO, blockiert mit 2-Ethylhexansäure,
5,00 Gew.-Teilen Schaumstabilisator Silicon DC 190,
7,50 Gew.-Teilen Wasser.
100 Gew.-Teile dieser Polyolkomponente wurden mit 70 Gew.-Teilen des Prepolymers 1) vermischt.

### Beispiel 2 (Erfindungsgemäß)

Die Polyolkomponente bestand aus
1875,00 Gew.-Teilen des difunktionellen Polyetherpolyols 1),
250,00 Gew.-Teilen des Polyetherpolyols 2),
250,00 Gew.-Teilen 1,4-Butandiol,
0,375 Gew.-Teilen Bis(diacetylacetonato)titanium(IV)-ethoxid-isopropoxid,
17,50 Gew.-Teilen Zink(II)-octoat,
25,00 Gew.-Teilen DABCO,
20,00 Gew.-Teilen DABCO, blockiert mit 2-Ethylhexansäure,
5,00 Gew.-Teilen Schaumstabilisator Silicon DC 190,
7,50 Gew.-Teilen Wasser.
100 Gew.-Teile dieser Polyolkomponente wurden mit 70 Gew.-Teilen des Prepolymers 1) vermischt.

### Beispiel 3 (Erfindungsgemäß)

Die Polyolkomponente bestand aus
1888,50 Gew.-Teilen des difunktionellen Polyetherpolyols 1),
250,00 Gew.-Teilen des Polyetherpolyols 2),
250,00 Gew.-Teilen 1,4-Butandiol,
0,375 Gew.-Teilen Bis(diacetylacetonato)titanium(IV)-ethoxid-isopropoxid,
5,00 Gew.-Teilen Zink(II)-octoat,
25,00 Gew.-Teilen DABCO,
20,00 Gew.-Teilen DABCO, blockiert mit 2-Ethylhexansäure,
5,00 Gew.-Teilen Schaumstabilisator Silicon DC 190,
7,50 Gew.-Teilen Wasser.
100 Gew.-Teile dieser Polyolkomponente wurden mit 70 Gew.-Teilen des Prepolymers 1) vermischt.

### Beispiel 4 (Erfindungsgemäß)

Die Polyolkomponente bestand aus
1888,50 Gew.-Teilen des difunktionellen Polyetherpolyols 1),
250,00 Gew.-Teilen des Polyetherpolyols 2),
250,00 Gew.-Teilen 1,4-Butandiol,
0,375 Gew.-Teilen Bis(diacetylacetonato)titanium(IV)-ethoxid-isopropoxid,
7,50 Gew.-Teilen Zink(II)-octoat,
5,00 Gew.-Teilen DABCO,
20,00 Gew.-Teilen DABCO, blockiert mit 2-Ethylhexansäure,
5,00 Gew.-Teilen Schaumstabilisator Silicon DC 190,
5,00 Gew.-Teilen Wasser.
100 Gew.-Teile dieser Polyolkomponente wurden mit 68. Gew.-Teilen des Prepolymers 1) vermischt.

### Beispiel 5 (Erfindungsgemäß)

Die Polyolkomponente bestand aus
1867,00 Gew.-Teilen des difunktionellen Polyetherpolyols 1),
250,00 Gew.-Teilen des Polyetherpolyols 2),
250,00 Gew.-Teilen 1,4-Butandiol,
0,375 Gew.-Teilen Bis(diacetylacetonato)titanium(IV)-ethoxid-isopropoxid,
25,00 Gew.-Teilen Zink(II)-octoat,
25,00 Gew.-Teilen DABCO,
20,00 Gew.-Teilen DABCO, blockiert mit 2-Ethylhexansäure,
5,00 Gew.-Teilen Schaumstabilisator Silicon DC 190,
7,50 Gew.-Teilen Wasser.
100 Gew.-Teile dieser Polyolkomponente wurden mit 70 Gew.-Teilen des Prepolymers 1) vermischt.

**Tabelle 1**

| Beispiel | 1 (V) | 2 | 3 | 4 | 5 |
|---|---|---|---|---|---|
| Startzeit [s] | *10* | *10* | *10* | *10* | *10* |
| Abbindezeit [s] | *22* | *44* | *43* | *42* | *40* |
| Steigzeit[s] | *45* | *42* | *43* | *40* | *42* |
| Freischaumraumgewicht [kg/m³] | *351* | *282* | *283* | *383* | *283* |
| Mindestentformzeit [min]* | *5,0* | *3,5* | *3,5* | *3,5* | *2,5* |
| ShoreA-Härte, 1 min nach Entformen | *42* | *44* | *35* | *38* | *41* |
| ShoreA-Härte, 2 min nach Entformen | *44* | *46* | *40* | *41* | *43* |
| ShoreA-Härte, 10 min nach Entformen | *52* | *51* | *49* | *50* | *49* |
| ShoreA-Härte, 60 min nach Entformen | *55* | *54* | *52* | *54* | *52* |
| ShoreA-Härte, 24 h nach Entformen | *59* | *57* | *55* | *58* | *54* |
| Stichaufweitung nach 60000 Biegungen [mm] | *Bruch nach 45000 Biegungen* | *1,7* | *5,0* | *6,0* | *0,2* |

| | | | | | |
|---|---|---|---|---|---|
| * Mindestentformzeit bedeutet die Zeit, die notwendig ist, um ein Formteil zu erhalten, das nach der Entformung nach Knicken um 180° keine Risse aufweist. | | | | | |

Wie aus der Tabelle 1 ersichtlich zeigen die erfindungsgemäßen Beispiele
1.) eine bessere Gasausbeute bei vergleichbarer Menge an eingesetztem Wasser sowie ein deutlich niedrigeres Freischaumraumgewicht (siehe insbesondere Beispiel 3),
2.) ein besseres Entformverhalten (kürzere Entformungszeiten, insbesondere Beispiel 5),
3.) deutlich bessere Dauerbiegeeigenschaften (siehe insbesondere Beispiel 5).

## Patentansprüche

1. Polyurethanelastomere erhältlich durch Umsetzung einer Polyolformulierung (A) aus
a) einer Polyolkomponente aus
a1) mindestens einem Polyetherpolyol mit einer OH-Zahl von 20 bis 112 und einer Funktionalität von 2, welches durch Alkoxylierung mit Propylenoxid und/oder Ethylenoxid mit überwiegend primären OH-Gruppen erhalten wird,
und gegebenenfalls
a2) mindestens einem Polyetherpolyol mit einer OH-Zahl von 20 bis 112 und einer Funktionalität von >2 bis 3,5, welches durch Alkoxylierung mit Propylenoxid und/oder Ethylenoxid mit überwiegend primären OH-Gruppen erhalten wird,
wobei die Polyolkomponente a) gegebenenfalls
organische Füllstoffe enthält, wie sie durch Pfropfung mit Styrol/Acrylnitril oder durch Addition von Diaminen und Diisocyanaten erhalten werden,
b) Kettenverlängerern und/oder Vernetzern mit Molekulargewichten von 60 bis 499 g/mol,
c) gegebenenfalls Treibmitteln,
d) Aminkatalysatoren,
e) einer Katalysatormischung bestehend aus mindestens einer organischen Titanverbindung und mindestens einer organischen Zinkverbindung und gegebenenfalls mindestens einem organischen Lithiumcarboxylat und gegebenenfalls mindestens einem organischen Bismutcarboxylat,
f) gegebenenfalls Zusatzstoffen
mit einer Isocyanatkomponente (B)
unter Einhaltung eines Äquivalenzverhältnis der NCO-Gruppen der Isocyanatkomponente (B) zur Summe der gegenüber Isocyanatgruppen reaktiven Wasserstoffe der Komponenten a), b), c), d) und e) von 0,8:1 bis 1,2:1, vorzugsweise 0,95:1 bis 1,15:1, besonders bevorzugt 0,98:1 bis 1,05:1.

2. Polyurethanelastomere gemäß Anspruch 1, **dadurch gekennzeichnet, dass** die Katalysatormischung e) in einer Menge von 0,001 bis 10 Gew.-%, bevorzugt 0,01 bis 1 Gew.-%, bezogen auf die Gesamtmenge an Verbindungen a), b), c), d) und f) vorhanden ist.

3. Polyurethanelastomere gemäß einem oder mehreren der Ansprüche 1 und 2, **dadurch gekennzeichnet, dass** als Isocyanatkomponente (B) ein Prepolymer (g) aus g1) 4,4'-Diphenylmethandiisocyanat und/oder durch Carbodiimidisierung modifiziertem 4,4'-Diphenylmethandiisocyanat und g2) ein oder mehreren Polyetherpolyolen mit einer OH-Zahl von 10 bis 112 und g3) Polyethylenglykolen und/oder Polypropylenglykolen mit Molekulargewichten von 135 g/mol bis 700 g/mol eingesetzt wird.

4. Verfahren zur Herstellung von Polyurethanelastomeren gemäß Anspruch 1 bis 3, **dadurch gekennzeichnet, dass** eine Polyolformulierung (A) bestehend aus
a) einer Polyolkomponente aus
a1) mindestens einem Polyetherpolyol mit einer OH-Zahl von 20 bis 112 und einer Funktionalität von 2, welches durch Alkoxylierung mit Propylenoxid und/oder Ethylenoxid mit überwiegend primären OH-Gruppen erhalten wird,
und gegebenenfalls
a2) mindestens einem Polyetherpolyol mit einer OH-Zahl von 20 bis 112 und einer Funktionalität von >2 bis 3,5, welches durch Alkoxylierung mit Propylenoxid und/oder Ethylenoxid mit überwiegend primären OH-Gruppen erhalten wird,
wobei die Polyolkomponente a) gegebenenfalls organische Füllstoffe enthält, wie die durch Pfropfung mit Styrol/Acrylnitril oder durch Addition von Diaminen und Diisocyanaten erhalten werden,
b) Kettenverlängerern und/oder Vernetzern mit Molekulargewichten von 60 bis 499 g/mol,
c) gegebenenfalls Treibmitteln,
d) Aminkatalysatoren,
e) einer Katalysatormischung bestehend aus mindestens einer organischen Titanverbindung und mindestens einer organischen Zinkverbindung und gegebenenfalls mindestens einem organischen Lithiumcarboxylat und gegebenenfalls mindestens einem organischen Bismutcarboxylat,
f) gegebenenfalls Zusatzstoffen
mit einer Isocyanatkomponente (B)
unter Einhaltung eines Äquivalenzverhältnis der NCO-Gruppen der Isocyanatkomponente (B) zur Summe der gegenüber Isocyanatgruppen reaktiven Wasserstoffe der Komponenten a), b), c), d) und e) von 0,8:1 bis 1,2:1, vorzugsweise 0,95:1 bis 1,15:1, besonders bevorzugt 0,98:1 bis 1,05:1
umgesetzt wird.

5. Verfahren gemäß Anspruch 4, **dadurch gekennzeichnet, dass** die Katalysatormischung e) in einer Menge von 0,001 bis 10 Gew.-%, bezogen auf die Gesamtmenge an Verbindungen a), b), c), d) und f), vorhanden ist.

6. Verfahren gemäß Anspruch 4, **dadurch** gekennzeicnet, dass als Isocyanatkomponente (B) ein Prepolymer (g) aus
g1) 4,4'-Diphenylmethandiisocyanat und/oder durch Carbodiimidisierung modifiziertem 4,4'-Diphenylmethandiisocyanat und
g2) einem oder mehreren Polyetherpolyolen mit einer OH-Zahl von 10 bis 112 und
g3) Polyethylenglykolen und/oder Polypropylenglykolen mit Molekulargewichten von 135 bis 700 g/mol
eingesetzt wird.

7. Verwendung der Polyurethanelastomere gemäß Anspruch 1 bis 3 zur Herstellung von elastomeren Formteilen, insbesondere Schuhsohlen mit Dichten von 180 bis 1100 kg/m³.

8. Elastomere Formteile für technische Artikel und Gebrauchsartikel, insbesondere Schuhsohlen aus Polyurethanelastomeren gemäß Anspruch 1 bis 3.
